(19) Europäisches Patentamt
European Patent Office
Office européen des brevets

(11) EP 1 998 233 B1

(12) # EUROPEAN PATENT SPECIFICATION

(45) Date of publication and mention of the grant of the patent:
**14.07.2010 Bulletin 2010/28**

(51) Int Cl.:
***G03G 21/00** (2006.01)* ***C08K 3/22** (2006.01)*
***C08K 3/04** (2006.01)*

(21) Application number: **08008519.4**

(22) Date of filing: **06.05.2008**

(54) **Method for producing cleaning blade for use in image-forming apparatus and cleaning blade**

Verfahren zur Herstellung einer Reinigungsklinge zum Gebrauch in bilderzeugenden Vorrichtungen und Reinigungsklinge

Procédé de production de lame de nettoyage à utiliser dans un appareil de formation d'image et lame de nettoyage

(84) Designated Contracting States:
**FR GB**

(30) Priority: **01.06.2007 JP 2007147064**

(43) Date of publication of application:
**03.12.2008 Bulletin 2008/49**

(73) Proprietor: **Sumitomo Rubber Industries, Ltd.**
**Kobe-shi**
**Hyogo-ken (JP)**

(72) Inventor: **Sugimoto, Mutsuki**
**Kobe-shi, Hyogo (JP)**

(74) Representative: **Manitz, Finsterwald & Partner GbR**
**Postfach 31 02 20**
**80102 München (DE)**

(56) References cited:
**EP-A- 0 941 871** **WO-A-97/49763**
**US-A- 4 431 704** **US-A- 6 043 308**
**US-A1- 2007 078 218**

- **RÖTHEMEYER, FRITZ; SOMMER, FRANZ: "Kautschuktechnologie, Werkstoffe-Verarbeitung-Produkte" 2001, CARL HANSER VERLAG , MÜNCHEN WIEN , XP002492919 * page 310 - page 311 ***

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 998 233 B1

## Description

BACKGROUND OF THE INVENTION

Field of the Invention

The present invention relates to a method for producing a cleaning blade for use in an image-forming apparatus, and the cleaning blade. More particularly, the cleaning blade of the present invention is formed by press-vulcanizing a thermosetting elastomer composition containing a rubber component to which a filler and a crosslinking agent are added.

Description of the Related Art

In an electrostatic photocopying machine, a copying operation is performed as follows: An electrostatic charge is applied to the surface of a photoreceptor by discharge; an image is exposed onto the photoreceptor to form an electrostatic latent image thereon; toner having an opposite polarity is attached to the electrostatic latent image to develop the electrostatic latent image; a toner image is transferred to recording paper; and the recording paper to which the toner image has been transferred is heated under pressure to fix the toner to the recording paper. Therefore to sequentially copy the image of an original document on a plurality of sheets of recording paper, it is necessary to remove the toner which remains on the surface of the photoreceptor after the toner image is transferred to the recording paper from the photoreceptor in the above-described processes. As a method of removing the toner which remains on the surface of the photoreceptor drum, a cleaning method of sliding a cleaning blade in contact with the surface of the photoreceptor drum, with the cleaning blade being pressed against the surface of the photoreceptor drum is known.

A cleaning blade composed of polyurethane rubber is conventionally used for the image-forming apparatus to clean pulverized-type toner or deformed polymerization-type toner present on a photoreceptor. The cleaning blade composed of the urethane rubber has a low heat resistance. Thus the edge of the cleaning blade important in cleaning the toner wears and rounds because of the friction between it and the photoreceptor. Consequently the cleaning blade composed of polyurethane rubber is incapable of removing the toner with age. Even though the contact pressure (hereinafter referred to as line pressure) of the edge of the cleaning blade against the photoreceptor is low, the cleaning blade composed of polyurethane rubber is capable of cleaning the conventional pulverized-type toner or the deformed polymerization-type toner. Therefore a cleaning blade composed of a material having a higher wear resistance than the polyurethane rubber has not been developed.

The present tendency is to save energy, reduce the cost of the image-forming apparatus, and form a high-quality image. That being the case, spherical small-diameter polymerization-type toner has been developed. As a result, unless the line pressure is increased, it is difficult to remove toner that remains on the surface of the photoreceptor, and the toner is liable to be removed defectively. The conventional cleaning blade composed of the polyurethane rubber has a large frictional force when the cleaning blade is so constructed that it has a large line pressure. Thus the edge of the cleaning blade wears to a high extent. Therefore it is difficult to increase the line pressure of the cleaning blade composed of the polyurethane rubber.

The following cleaning blade is proposed, as disclosed in Japanese Patent Application Laid-Open No. 2003-248404 to solve the problem of the cleaning blade made of the polyurethane rubber which has a low heat resistance and a low mechanical property in a high-temperature region. The cleaning blade is made of the hydrogenated nitrile rubber and the polymer alloy composed of the hydrogenated nitrile rubber and the zinc methacrylate finely dispersed in the hydrogenated nitrile rubber. The surfaces of the cleaning blade at both sides thereof are coated with a stainless foil to improve the releasability thereof from a die and increase the tensile modulus of elasticity thereof.

The cleaning blade disclosed in the patent document 1 is made of unvulcanized rubber not having rubber elasticity. When the unvulcanized rubber is molded into the cleaning blade, fine irregularities are formed on the surface thereof, which adversely affects the cleaning performance. When both sides of the cleaning blade is coated with the stainless foil, the stainless foil peels off the cleaning blade owing to the friction between the cleaning blade and a photoreceptor. Particles of the peeled stainless foil damage the surface of the photoreceptor. In the patent document 1, the amount of the zinc methacrylate to be dispersed in the hydrogenated nitrile rubber is not specified. In dependence on an amount of the zinc methacrylate, it is impossible to obtain the cleaning blade having proper properties.

Patent Document 1: Japanese Patent Application Laid-Open No. 2003-248404

US 2007/0078218 A1 discloses a cleaning blade for the use in an image-forming apparatus formed by molding a resin composition containing a rubber component consisting of a thermosetting elastomer containing acrylonitrile as a constituent monomer thereof and having a bound acrylonitrile amount at 15 to 50 %.

Röthemeyer and Sommer disclose in "Kautschuktechnologie, Werkstoffe-Verarbeitung-Produkte, 2001, Seiten

310 bis 311, Carl Hanser Verlag, München, zinc oxide with a particle size between 0.1 and 5 μm which may be applied as activator.

WO 97/49763 A1 discloses a method for vulcanizing an elastomeric material, in which zinc oxide and an amphiphilic triblock copolymer are mixed with each other, whereafter the so produced dispersion is mixed with an elastomeric component and sulfur, whereupon the so produced mixture is vulcanized.

SUMMARY OF THE INVENTION

The present invention has been made in view of the above-described problems. Therefore it is an object of the present invention to provide a method for producing a cleaning blade, for use in an image-forming apparatus, which is allowed to have improved performance in cleaning spherical small-diameter polymerization-type toner by improving the wear resistance thereof, and provide the cleaning blade.

To solve the above-described problems, the first invention provides a method for producing a cleaning blade, for use in an image-forming apparatus, including the steps of roughly kneading a rubber component containing rubber derived from acrylonitrile butadiene copolymer therein by supplying the rubber derived from acrylonitrile butadiene copolymer to a rubber-kneading apparatus; kneading the rubber component (1), a filler (2) essentially containing carbon black and zinc oxide therein and a crosslinking agent (3) containing sulfur therein by simultaneously supplying the filler (2) and the crosslinking agent (3) to the rubber-kneading apparatus; and press-vulcanizing a mixture consisting of a thermosetting elastomer composition obtained at the kneading step to generate zinc sulfide and mold the thermosetting elastomer composition.

In the producing method of the present invention, as described above, after the rubber component (1) is kneaded roughly, the filler (2) containing the carbon black and the zinc oxide therein and the crosslinking agent (3) containing the sulfur therein are simultaneously supplied to the roughly kneaded rubber component. Thereafter the rubber component (1), the filler (2), and the crosslinking agent (3) are kneaded. Therefore the zinc oxide serving as the filler (2) has a highly improved dispersibility in the thermosetting elastomer composition.

The thermosetting elastomer composition obtained in the kneading step is filled in a die and press-vulcanized. As a result, the zinc oxide finely dispersed in the thermosetting elastomer composition reacts with the sulfur, with the zinc oxide in contact with the sulfur of the crosslinking agent to a high extent, thus effectively acting as a vulcanization-accelerating assistant. Thereby crosslinking, namely, vulcanization to be performed by the sulfur is accelerated. Therefore the resulting thermosetting elastomer composition contains the zinc sulfide generated when the mixture is vulcanized, with the zinc sulfide being finely dispersed therein.

Because particles of the zinc oxide and those of the zinc sulfide are finely dispersed in the resulting thermosetting elastomer composition, the produced cleaning blade is allowed to have improved wear resistance and improved performance of removing the spherical small-diameter polymerization-type toner.

It is preferable that the rubber component (1) to be roughly kneaded consists of acrylonitrile butadiene rubber (NBR); hydrogenated acrylonitrile butadiene rubber (HNBR) having residual double bonds not more than 10%; carboxyl group-introduced acrylonitrile butadiene rubber (XNBR); or carboxyl group-introduced and hydrogenated acrylonitrile butadiene rubber (HXNBR).

It is favorable that the content ratio of the carboxyl group of the XNBR and the HXNBR obtained by introducing the carboxyl group into the NBR and the HNBR respectively is set to 0.5 to 30 mass%.

The particle diameter of the zinc oxide to be supplied to the rubber-kneading apparatus at the kneading step is set to not less than 0.1μm nor more than 50μm. The particle diameter of the zinc sulfide to be generated at the press-vulcanizing step is set to not less than 1nm nor more than 500nm.

The zinc sulfide to be finely dispersed in the resulting thermosetting elastomer composition forms primary particles having diameters of 1 to 500nm or the primary particles aggregate with one another to form secondary particles having diameters of 10 to 500nm.

When the diameter of the primary particle of the zinc sulfide is larger than 500nm, the zinc sulfide forms a defect in the resulting thermosetting elastomer composition, which may cause a fear that the zinc sulfide deteriorates the wear resistance of the produced cleaning blade. The particle diameter of the zinc sulfide is favorably in the range of 1 to 300nm and more favorably in the range of 1 to 100nm. When the particle diameter of the zinc sulfide is less than 1nm, the particle diameter cannot be identified.

The reason the particle diameter of the zinc oxide is set to not less than 0.1μm nor more than 50μm is as follows: When the particle diameter of the zinc oxide is set to more than 50pm, the zinc oxide forms a defect in the resulting thermosetting elastomer composition, which causes a fear that the zinc oxide may deteriorate the wear resistance of the produced cleaning blade. The particle diameter of the zinc oxide is favorably in the range of 0.1 to 40μm, more favorably in the range of 0.1 to 25pm, and most favorably in the range of 0.1 to 10μm.

In the above-described producing method, it is preferable that the roughly kneading step is performed at a temperature of 60 to 110°C for 0.5 to 6 minutes, that the kneading step is performed at a temperature of 60 to 110°C

for 0.5 to 10 minutes, and that the press-vulcanizing step is performed at a temperature of 160 to 170°C for 20 to 40 minutes.

The reason the temperature at the roughly kneading step and the kneading step is set to 60 to 110°C is as follows: When the temperature at the roughly kneading step and the kneading step is less than 60°C, the filler (2) containing the zinc oxide and other substances therein does not plasticize sufficiently and insufficient kneading is performed. When the temperature at the roughly kneading step and the kneading step is more than 110°C, there is a fear that the components to be mixed with one another are decomposed. The reason the kneading step is performed for 0.5 to 10 minutes is as follow: When the kneading step is performed for less than 0.5 minutes, insufficient kneading is performed and the components are not sufficiently mixed with one another. On the other hand, when the kneading step is performed for more than 10 minutes, there is a fear that the components to be mixed with one another may be decomposed.

As the rubber-kneading apparatus for roughly kneading the components and kneading them, a twin screw extruder, an open roll, a Banbury mixer, a kneader, and the like are used.

It is preferable to press-vulcanize the thermosetting elastomer composition at 160 to 170°C for 20 to 40 minutes by filling it in a vulcanizing can. When the press-vulcanizing step is performed at a temperature lower than 160°C for less than 20 minutes, the thermosetting elastomer composition is vulcanized insufficiently. On the other hand, when the press-vulcanizing step is performed at a temperature higher than 170°C for more than 40 minutes, there is a fear that the rubber component may be decomposed.

The invention also provides a cleaning blade according to claim 5, for use in an image-forming apparatus, composed of a thermosetting elastomer composition containing a rubber component (1) containing rubber derived from acrylonitrile butadiene copolymer therein; a filler (2) containing zinc oxide and carbon black therein; and a crosslinking agent (3) containing sulfur and zinc sulfide therein. The zinc oxide of the filler (2) is dispersed as fine particles having diameters not less than 0.1μm nor more than 50μm; and the zinc sulfide is dispersed as fine particles having diameters not less than 1nm nor more than 500nm, wherein 0.1 to 30 parts by mass of said zinc oxide of said filler (2), 0.1 to 100 parts by mass of said carbon black of said filler (2), and 0.1 to 30 parts by mass of said crosslinking agent (3) are added to 100 parts by mass of said rubber component (1), and wherein the cleaning blade is produced by the method according to the aforementioned described first invention.

The components are described in detail below.

It is preferable that the rubber component (1) consists of one kind of rubber derived from acrylonitrile butadiene copolymer selected from the group consisting of acrylonitrile butadiene rubber (NBR); hydrogenated acrylonitrile butadiene rubber (HNBR) having residual double bonds not more than 10%; carboxyl group-introduced acrylonitrile butadiene rubber (XNBR); and carboxyl group-introduced and hydrogenated acrylonitrile butadiene rubber (HXNBR).

As the NBR, it is possible to use any of low-nitrile NBR having the bound acrylonitrile amount of not more than 25 mass%, intermediate-nitrile NBR having the bound acrylonitrile amount of 25 mass% to 31 mass%, moderate high-nitrile NBR having the bound acrylonitrile amount of 31 mass% to 36 mass%, and high-nitrile NBR having the bound acrylonitrile amount of not less than 36 mass%. It is favorable that the bound acrylonitrile amount of the NBR is in the range of 21 mass% to 46 mass% and more favorable that the bound acrylonitrile amount thereof is in the range of 31 mass% to 36 mass%.

The HNBR is obtained by chemically hydrogenating the double bonds contained in butadiene present in the polymer main chain of the NBR. The HNBR used in the present invention has the residual double bonds not more than 10% after the double bonds are hydrogenated.

The bound acrylonitrile amount of the HNBR is favorably in the range of 21 mass% to 46 mass% and more favorably in the range of 21 mass% to 44 mass%. The reason the bound acrylonitrile amount of the HNBR is set to 21 mass% to 46 mass% is as follows: If the bound acrylonitrile amount of the HNBR is less than 21 mass%, the resulting thermosetting elastomer composition has an inferior mechanical property. On the other hand, if the bound acrylonitrile amount of the HNBR is more than 46 mass%, the resulting thermosetting elastomer composition has a high glass transition temperature Tg and a low toner-removing performance at a low temperature and humidity.

The Mooney viscosity ML1+4 (100°C) of the HNBR is favorably in the range of 20 to 160 and more favorably in the range of 40 to 150. The reason the Mooney viscosity ML1+4 (100°C) of the HNBR is set to the range of 20 to 160 is as follows: When the Mooney viscosity ML1+4(100°C) thereof is less than 20, the resulting thermosetting elastomer composition has a low molecular weight and a low wear resistance. On the other hand, when the Mooney viscosity ML1+4(100°C) is more than 160, the resulting thermosetting elastomer composition has an excessive molecular weight distribution. Thereby it is difficult to perform kneading and molding operations.

The XNBR and the HXNBR are obtained by terpolymerizing acrylic acid or methacrylic acid to introduce a carboxyl group into the side chain or the terminal of the NBR and the HNBR respectively as the third component thereof.

A chemical formula 1 shown below indicates the chemical structure of NBR. A chemical formula 2 shown below indicates the chemical structure of the XNBR obtained by terpolymerizing the acrylic acid (R=H) or the methacrylic acid ($R=CH_3$) to introduce the carboxyl group into the side chain or the terminal of the NBR as the third component thereof.

Chemical formula 1

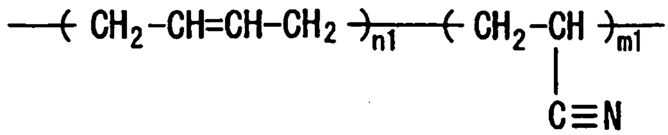

Chemical formula 2

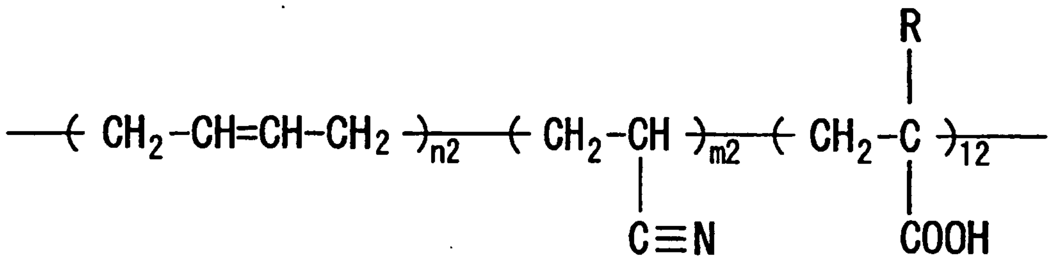

The carboxyl group contained in the XNBR and the HXNBR can be connected with the zinc oxide by ionic bond. The zinc oxide (zinc ion) connected with the carboxyl group by ionic bond can be connected with the carboxyl group of other main chain by ionic bond, thus playing the role of pseudo-crosslinking. Further by introducing the hydrogen bond of carboxylic acid into the NBR and HNBR, the XNBR and the HXNBR can be formed respectively as high-strength materials.

It is favorable that in the XNBR and the HXNBR obtained by introducing the carboxyl group into the NBR and the HNBR respectively, the content ratio of the carboxyl group is set to 0.5 to 30 mass%. When the content ratio of the carboxyl group is less than 0.5 mass%, reactivity in the crosslinking is low. On the other hand, if the content ratio of the carboxyl group is more than 30 mass%, the carboxyl group makes an excessive reaction and the XNBR and the HXNBR scorch. As a result, there is a fear that the resulting thermosetting elastomer composition may have deteriorated mechanical property. The content ratio of the carboxyl group is set more favorably to the range of 10 to 20 mass%.

It is possible to use the commercially available XNBR and the HXNBR formed by the terpolymerization. For example, it is possible to use Krynac series and Therban series produced by Bayer Ltd.

As the rubber derived from acrylonitrile butadiene copolymer of the rubber component (1), the NBR, the HNBR, the XNBR, and the HXNBR can be used singly or in combination. It is preferable to set the mixing amount of the XNBR and/or the HXNBR to 40 to 100 parts by mass in 100 parts by mass of the rubber component (1). When the mixing amount of the XNBR or/and the HXNBR is less than 40 parts by mass in 100 parts by mass of the rubber component (1), the crosslinking to be made by the action of the carboxylic acid has a low reactivity.

The zinc oxide to be added to the rubber component as the filler (2) is used as a vulcanization-accelerating assistant.

According to the present invention, 0.1 to 30 parts by mass of the zinc oxide is added to 100 parts by mass of the rubber component (1). When the mixing amount of the zinc oxide is less than 0.1 parts by mass, it is impossible to

obtain the effect of the zinc oxide serving as the vulcanization-accelerating assistant to a sufficient extent and expect the improvement of the mechanical property of the resulting thermosetting elastomer composition. On the other hand, when the mixing amount of the zinc oxide is more than 30 parts by mass, it is difficult to finely disperse the zinc oxide and a reaction residue is generated. Thus there is a fear that the resulting thermosetting elastomer composition may have a low mechanical property.

As the vulcanization-accelerating assistant, other metal oxides may be combined with the zinc oxide. As the "other metal oxides", magnesium oxide, aluminum oxide, copper oxide, ferric oxide, nickel oxide, calcium oxide, sodium oxide, and lead oxide are listed. The magnesium oxide is especially preferable. These metal oxides can be used singly or in combination of not less than two kinds thereof.

When the filler (2) contains the other metal oxide therein in addition to the zinc oxide, it is preferable that the other metal oxide is dispersed in the thermosetting elastomer composition as fine primary particles having diameters of 0.1 to 50μm, similarly to the zinc oxide. It is preferable that the mixing amount of the zinc oxide : the mixing amount of the other metal oxide = 1 : 0.1 to 1.

As the crosslinking-accelerating assistant, known vulcanization-accelerating assistants other than the metal oxide may be used in combination with the zinc oxide. As the vulcanization-accelerating assistant other than the metal oxide, fatty acids such as stearic acid, oleic acid, cotton seed fatty acid, and the like are listed. The mixing amount of the vulcanization-accelerating assistant other than the metal oxide is not limited to a specific amount, but appropriately selected in dependence on the kind thereof. For example, the mixing amount thereof is set favorably to the range of 0.1 to 20 parts by mass and more favorably 0.1 to 10 parts by mass for 100 parts by mass of the rubber component (1).

As the filler (2) serving as the reinforcing agent, carbon black is used to guide an interaction of the carbon black with the rubber.

As the carbon black, it is possible to use SAF carbon (average particle diameter: 18 to 22nm), SAF-HS carbon (average particle diameter: about 20nm), ISAF carbon (average particle diameter: 19 to 29nm), N-339 carbon (average particle diameter: about 24nm), ISAF-LS carbon (average particle diameter: 21 to 24nm), I-ISAF-HS carbon (average particle diameter: 21 to 31nm), HAF carbon (average particle diameter: about 26 to 30nm), HAF-HS carbon (average particle diameter: 22 to 30nm), N-351 carbon (average particle diameter: about 29nm), HAF-LS carbon (average particle diameter: about 25 to 29nm), LI-HAF carbon (average particle diameter: about 29nm), MAF carbon (average particle diameter: 30 to 35nm), FEF carbon (average particle diameter: about 40 to 52nm), SRF carbon (average particle diameter: 58 to 94nm), SRF-LM carbon, and GPF carbon (average particle diameter: 49 to 84nm) are listed.

As the filler, it is possible to use inorganic reinforcing agents such as white carbon (silica filler such as dry silica and wet silica, silicate such as magnesium silicate), calcium carbonate, magnesium carbonate, magnesium silicate, clay (aluminum silicate), silane-modified clay, and talc; and organic reinforcing agents such as coumarone and indene resin, phenol resin, high styrene resin, and wood meal.

The mixing amount of the reinforcing agents is set favorably to the range of 0.1 to 100 parts by mass, more favorably to the range of 1 to 70 parts by mass, and most favorably to the range of 1 to 50 parts by mass for 100 parts by mass of the rubber component (1).

The crosslinking agent (3) essentially contains sulfur therein. The sulfur and an organic sulfur-containing compound may be used in combination.

The sulfur is used by pulverizing recovered sulfur to use it in the form of fine powder. Surface-treated sulfur having improved dispersibility can be appropriately used. Insoluble sulfur can be also used to prevent blooming from occurring from unvulcanized rubber.

As the organic sulfur-containing compounds, N,N'-dithiobismorpholine, diphenyl disulfide, pentabromo disulfide, pentachlorothiophenol, and zinc pentachlorothiophenolate are listed. The diphenyl disulfide is especially favorable.

Other crosslinking agents may be combined with the sulfur. As other crosslinking agents, organic peroxides, heat-resistant crosslinking agents, and resin crosslinking agents are listed.

As the organic peroxides, it is possible to list benzoyl peroxide, 1,1-di-(tert-butyl peroxy)-3,3,5-trimethylcyclohexane, 2,5-dimethyl-2,5-di-(benzoyl peroxy)hexane, 2,5-dimethyl-2,5-di-(benzoyl peroxy)-3-hexene, 2,5-dimethyl-2,5-di-(tert-butyl peroxy)hexane, di-tert-butyl peroxy-di-isopropylbenzene, di-tert-butyl peroxide, di-tert-butylperoxybenzoate, dicumyl peroxide, tert-butyl cumyl peroxide, 2,5-dimethyl-2,5-di-(tert-butyl peroxy)-3-hexene, 1,3-bis(tert-butyl peroxyisopropyl)benzene, n-butyl-4,4-bis(tert-butyl peroxy)valerate, p-chlorobenzoyl peroxide, 2,4-dichlorobenzoyl peroxide, tert-butyl peroxyisopropyl carbonate, diacetyl peroxide, and lauroyl peroxide. The dicumyl peroxide is especially favorable.

The heat-resistant crosslinking agent includes 1,3-bis(citraconimide methyl)benzene, hexamethylene-1,6-sodium bisthiosulfate·dihydrate, and 1,6-bis(dibenzylthiocarbamoyl disulfide)hexane.

As the resin crosslinking agent, alkylphenol resin or bromized alkylphenol formaldehyde resin such as TACKROL 201 (produced by TAOKA CHEMICAL CO., LTD.), TACKROL 250-III (produced by TAOKA CHEMICAL CO., LTD.), and HITANOL 2501 (produced by Hitachi Chemical Co., Ltd.) are listed. It is especially preferable to use the alkylphenol resin.

The mixing amount of the crosslinking agent (3) for the rubber component should be large enough to allow the property of the rubber component to be sufficiently displayed. According to the present invention, the mixing amount of the crosslinking agent (3) is selected in the range of 0.1 parts by mass to 30 parts by mass for 100 parts by mass of the rubber component (1).

It is preferable to add 0.1 to 20 parts by mass of the sulfur to 100 parts by mass of the rubber component (1).

As the filler (2), it is possible to add one or more kinds of the filler (2) selected from among a vulcanizing accelerator, an age resistor, a co-crosslinking agent, a softener for rubber, and other kinds of additives to the rubber component (1).

As the vulcanizing accelerator, both an inorganic vulcanizing accelerator and an organic vulcanizing accelerator can be used.

As the inorganic accelerator, slaked lime, magnesium oxide, titanium oxide, and litharge (PbO) are listed.

As the organic accelerator, thiurams, thiazoles, thioureas, dithiocarbamates, guanidines, and sulfenamides are listed.

As the thiurams, tetramethylthiuram monosulfide, tetramethylthiuram disulfide, tetraethylthiuram disulfide, tetrabutylthiuram disulfide, and dipentamethylenethiuram tetrasulfide are listed.

As the thiazoles, it is possible to list 2-mercaptobenzothiazole, dibenzothiazyl disulfide, N-cyclohexyl benzothiazole.

As the thioureas, N,N'-diethylthiourea, ethylenethiourea, and trimethylthiourea are listed.

As the dithiocarbamates, zinc dimethyl dithiocarbamate, zinc diethyl dithiocarbamate, zinc dibutyl dithiocarbamate, sodium dimethyl dithiocarbamate, sodium diethyl dithiocarbamate, copper dimethyl dithiocarbamate, ferric dimethyl dithiocarbamate (III), selenium diethyl dithiocarbamate, and tellurium diethyl dithiocarbamate are listed.

As the guanidine accelerator, it is possible to list dio-tolylguanidine, 1,3-diphenyl guanidine, 1-o-tolylbiguanide, and di-o-tolylguanidine salts of dicatechol borate.

As the sulfenamides, N-cyclohexyl-2-benzothiazolylsulfenamide, N-oxydiethylene-2-benzothiazolylsulfenamide, N-tert-butyl-2-benzothiazolylsulfenamide, N,N-dicyclohexyl-2-benzothiazolylsulfenamide and the like are listed.

These vulcanizing accelerators may be used singly or in combination of not less than two kinds.

As the vulcanizing accelerator, it is preferable to use the dibenzothiazyl disulfide and/or the tetramethylthiuram monosulfide.

The age resistor is an additive for preventing oxidative deterioration, heat deterioration, ozone deterioration, and fatigue deterioration. The age resistor is classified into a primary age resistor including amines, phenols, and the like and a secondary age resistor including sulfur compounds, phosphites, and the like. The primary age resistor has the function of donating hydrogen to various polymer radicals to stop a chain reaction of auto-oxidation. The secondary age resistor shows stabilizing action by changing hydroxy peroxides into stable alcohols.

Because in recent years, the cleaning blade for use in the image-forming apparatus is exposed to various environment, it is necessary to take measures for preventing the cleaning blade from aging. A polymer is destroyed by the friction between a photoreceptor and the cleaning blade. Radicals generated by the destruction of the polymer accelerate an automatic oxidative reaction. The wear of the cleaning blade is accelerated by the oxidative deterioration. Therefore it is necessary to take measures of preventing the cleaning blade from being subjected to the oxidative deterioration. Because the cleaning blade is subjected to high temperature, it is also important to prevent the cleaning blade from being thermally deteriorated. Because ozone is generated by a charging mechanism, it is necessary to take measures of preventing the cleaning blade from being deteriorated by ozone. Therefore by combining several kinds of age resistors with one another, it is possible to prevent the oxidative deterioration, the heat deterioration, the ozone deterioration, and the fatigue deterioration. It is very important to add the age resistor to the rubber component for preventing the edge of the cleaning blade from being worn by the oxidative deterioration.

As the age resistor, amines, phenols, imidazoles, and phosphorus-containing substances, and thioureas are listed.

As the amines, phenyl-$\alpha$-naphthylamine, 2,2,4-trimethyl-1,2-dihydroquinoline polymer, 6-ethoxy-2,2,4-trimethyl-1,2-dihydroquinoline, p,p'-dioctyldiphenylamine, p,p'-dicumyldiphenylamine, N,N'-di-2-naphthyl-p-phenylenediamine, N,N'-diphenyl-p-phenylenediamine, N-phenyl-N'-isopropyl-p-phenylenediamine, and N-phenyl-N'-1,3-dimethylbutyl-p-phenylenediamine are listed.

The phenols that are used in the present invention includes 2,6-di-tert-butyl-4-methyl phenol; styrenated methyl phenol; 2,2'-methylene bis (4-ethyl-6-tert-butyl phenol); 2,2'-methylene bis (4-methyl-6-tert-butyl phenol); 4,4'-butylidene bis (3-methyl-6-tert-butyl phenol); 4,4'-thiobis (3-methyl-6-tert-butyl phenol); 2,5-di-tert-butyl hydroquinone; and 2,5-di-tert-amyl hydroquinone.

As the imidazoles, 2-mercaptobenzimidazole, zinc salts of the 2-mercaptobenzimidazole, and nickel dibutyldithiocarbamate are listed.

As other age resistors, it is possible to use phosphorus-containing substances such as tris (nonyl phenyl) phosphite; thioureas such as 1,3-bis(dimethylaminopropyl)-2-thiourea, tributyl thiourea, and the like; and wax for preventing ozone deterioration.

These age resistors can be used singly or in combination of not less than two kinds thereof.

Above all, it is preferable to use the p,p'-dicumyldiphenylamine and/or 2-mercaptobenzimidazole.

The mixing amount of the age resistor is set to 0.1 to 15 parts by mass for 100 parts by mass of the rubber component (1). The reason the mixing amount of the age resistor is set to 0.1 to 15 parts by mass for 100 parts by mass of the rubber component (1) is as follows: When the mixing amount of the age resistor is less than 0.1 parts by mass, the effect of the age resistor is not displayed. Thus there is a fear that the resulting thermosetting elastomer composition may have an inferior mechanical property and an excessive wear. On the other hand, when the mixing amount of the age resistor exceeds 15 parts by mass, the age resistor is dispersed unfavorably owing to an excessive mixing amount thereof. Thereby there is a fear that the thermosetting elastomer composition may have a deteriorated mechanical property.

A co-crosslinking agent may be added to the rubber component as the filler (2). The co-crosslinking agent crosslinks itself and reacts with rubber molecules to crosslink them, thus making the entire elastomer composition polymeric. As the co-crosslinking agent, ethylene unsaturated monomers such as methacrylate, metal salts of methacrylic acid or acrylic acid, polyfunctional polymers, and dioximes are listed.

As the ethylene unsaturated monomer, the following substances are listed:

(a) Monocarboxylic acids such as acrylic acid, methacrylic acid, crotonic acid, and the like.
(b) Dicarboxylic acids such as maleic acid, fumaric acid, itaconic acid, and the like.
(c) Ester or anhydride of the above-described unsaturated carboxylic acids (a) and (b)
(d) Metal salts of the above-described (a) through (c)
(e) Aliphatic conjugated dienes such as 1,3-butadiene, isoprene, 2-chloro-1,3-butadiene, and the like
(f) Aromatic vinyl compounds such as styrene, $\alpha$-methylstyrene, vinyltoluene, ethyl vinylbenzene, divinylbenzene, and the like
(g) Vinyl compounds having a heterocyclic ring such as triallyl isocyanurate, triallyl cyanurate, and vinylpyridine
(h) Vinyl cyanide compounds such as (metha)acrylonitrile and $\alpha$-chloroacrylonitrile, acrolein, formylstyrol, vinyl methyl ketone, vinyl ethyl ketone, and vinyl butyl ketone.

The softener for rubber may be added to the rubber component as the filler (2). As the softener for rubber, it is possible to use derivatives of phthalic acid, isophthalic acid, adipic acid, sebacic acid, benzoic acid, and phosphoric acid.

More specifically, it is possible to list dioctyl phthalate (DOP), dibutyl phthalate (DBP), di-(2-ethylhexyl) phthalate, di-iso-octyl phthalate (DIOP), higher alcohol phthalate, di-(2-ethylhexyl) sebacate, polyester adipate, dibutyl diglycol adipate, di(butoxyethoxyethyl) adipate, iso-octyl-tall oil fatty ester, tributyl phosphate (TBP), tributoxyethyl phosphate (TBEP), tricresyl phosphate (TCP), cresyl-diphenyl phosphate (CDP), and diphenyl alkane. These softeners for rubber can be used singly or in combination of not less than two kinds thereof.

The mixing amount of the softener for rubber should be large enough to allow the property of the rubber component to be sufficiently displayed. The mixing amount of the softener for rubber is selected in the range of 0 to 5 parts by mass for 100 parts by mass of the rubber component.

As other additives, amide compounds, fatty acids, metal salts of the fatty acids, and wax are listed.

As the amide compounds, aliphatic amide compounds and aromatic amide compounds are listed. As fatty acids of the aliphatic amide compounds, oleic acid, stearic acid, erucic acid, caproic acid, caprilic acid, lauryl acid, myristic acid, palmitic acid, arachidic acid, behenic acid, palmitoleic acid, eicosane acid, erucic acid, elaidic acid, trans-11-eicosene acid, trans-13-docosene acid, linolic acid, linolenic acid, and ricinoleic acid are listed. As the aliphatic amide compounds, ethylene-bis-erucic acid amide, ethylene-bis-oleic acid amide, ethylene-bis-stearic acid amide, oleic acid amide, stearic acid amide, erucic acid amide, and behenic acid amide are listed. The oleic acid amide, the stearic acid amide, and the erucic acid amide are especially preferable.

As fatty acids, lauryl acid, stearic acid, palmitic acid, myristic acid, and oleic acid are listed. As metal salts of the fatty acids, metal salts of the fatty acids and metals such as zinc, iron, calcium, aluminum, lithium, magnesium, strontium, barium, cerium, titanium, zirconium, lead, and manganese are listed.

As the wax, paraffin wax, montan wax, and amide wax are listed.

The mixing amount of these additives should be large enough to allow the property of the rubber component to be sufficiently displayed. In the present invention, the mixing amount of the additives for 100 parts by mass of the rubber component is selected in the range of 0 to 10 parts by mass.

The effect of the present invention is described below. In the method of the present invention for producing the cleaning blade for use in the image-forming apparatus, after roughly kneading the rubber component (1) by using the rubber-kneading apparatus, the filler (2) essentially containing the zinc oxide therein and the crosslinking agent (3) containing the sulfur therein are simultaneously supplied to the rubber-kneading apparatus to knead the components. Therefore it is possible to sufficiently mix the zinc oxide and the sulfur with each other and finely disperse the zinc oxide.

When the obtained thermosetting elastomer composition is press-vulcanized, the zinc oxide contacts the crosslinking agent to a high extent. Thereby the zinc oxide effectively displays its action as the vulcanization-accelerating assistant, thus accelerating the vulcanization. Thus the zinc sulfide formed at the time of the vulcanization is finely dispersed. Because the vulcanization is accelerated in this manner, it is possible to improve the wear resistance of the produced cleaning blade and bring the cleaning blade into contact with the photoreceptor and the like from which toner is removed at a high contact pressure.

BRIEF DESCRIPTION OF THE DRAWINGS

Fig. 1 is a sectional illustration showing a cleaning member having a cleaning blade of the present invention for use in an image-forming apparatus.

Fig. 2 is an explanatory view for explaining the method of measuring a wear indication value of the cleaning blade of the present invention; Fig. 2A is an enlarged view showing an edge of the cleaning blade for use in an image-forming apparatus after a paper supply test for image formation is conducted by mounting the cleaning blade on the image-forming apparatus; and Fig. 2B shows a portion of the cleaning blade at which the wear indication value is measured.

Fig. 3 is an illustrative view showing a color image-forming apparatus where the cleaning blade of the present invention is mounted.

DETAILED DESCRIPTION OF THE PREFERRED EMBODIMENTS

An embodiment of the cleaning blade of the present invention for use in an image-forming apparatus is described in detail below.

Fig. 1 shows a cleaning blade 10 of the present invention. The cleaning blade 10 is bonded to a supporting member 21 with an adhesive agent. The supporting member 21 is composed of a rigid metal, an elastic metal, plastic or ceramic. It is favorable that the supporting member 21 is made of metal. Chrome-free SECC is especially favorable.

As the adhesive agent for bonding the cleaning blade 10 and the supporting member 21 to each other, a polyamide or polyurethane hot-melt adhesive agent and an epoxy or phenol adhesive agent are used. It is preferable to use the hot-melt adhesive agent.

Fig. 3 shows an image-forming apparatus where the cleaning blade 10 of the present invention is mounted. An image is formed through the following steps by the image-forming apparatus shown in Fig. 3.

Initially, a photoreceptor 12 rotates in the direction shown with the arrow of Fig. 3. After the photoreceptor 12 is charged by a charging roller 11, a laser 17 exposes a non-imaging portion of the photoreceptor 12 via a mirror 16, thus destaticizing the non-imaging portion. At this time, the portion of the photoreceptor 12 corresponding to an imaging portion is charged. Thereafter a toner 15a is supplied to the photoreceptor 12 and attaches to the charged imaging portion to form a first-color toner image. The toner image is transferred to an intermediate transfer belt 13 via a primary transfer roller 19a. In the same manner, a toner image of each of other color toners 15b through 15d formed on the photoreceptor 12 is transferred to the intermediate transfer belt 13. A full-color image composed of the four color toners 15a through 15d is formed on the intermediate transfer belt 13. The full-color image is transferred to a to-be-transferred material (normally, paper) 18 via a secondary transfer roller 19b. When the to-be-transferred material 18 passes between a pair of a fixing rollers 14 heated to a predetermined temperature, the full-color image is fixed to the surface thereof.

At the above-described steps, to sequentially copy the image of an original document on a plurality of sheets of recording paper, toner which has not been transferred to the intermediate transfer belt 13 but has remained on the photoreceptor 12 is removed from the surface of the photoreceptor 12 by rubbing the photoreceptor 12 with a cleaning blade 10 pressed against the surface of the photoreceptor 12 and is collected in a toner collection box 22.

The method for producing a cleaning blade 10 of the present invention is described below.

The cleaning blade 10 is produced through a roughly kneading step of roughly kneading a rubber component (1), a kneading step, and a press-vulcanizing step.

At the roughly kneading step, rubber derived from acrylonitrile butadiene copolymer is supplied to a rubber-kneading apparatus such as a twin screw extruder, an open roll, a Banbury mixer, and a kneader to roughly knead the rubber component (1) at 60 to 110°C for 0.5 to 6 minutes.

At the kneading step, a filler (2) essentially containing carbon black and zinc oxide therein and a crosslinking agent (3) containing sulfur therein are supplied simultaneously to the rubber-kneading apparatus to knead the components at 60 to 110°C for 0.5 to 10 minutes.

At the press-vulcanizing step, a mixture consisting of a thermosetting elastomer composition obtained at the kneading step is filled in a die to press-vulcanize it at 160 to 170°C for 20 to 40 minutes to generate zinc sulfide and

mold the thermosetting elastomer composition.

At the step of roughly kneading the rubber component (1), by supplying the rubber derived from acrylonitrile butadiene copolymer consisting of acrylonitrile butadiene rubber (NBR), hydrogenated acrylonitrile butadiene rubber (HNBR) having residual double bonds not more than 10%, carboxyl group-introduced acrylonitrile butadiene rubber (XNBR) or carboxyl group-introduced and hydrogenated acrylonitrile butadiene rubber (HXNBR) to the rubber-kneading apparatus, the rubber component (1) is roughly kneaded at 60 to 110°C for 0.5 to 6 minutes.

As the NBR, it is possible to use any of low-nitrile NBR having the bound acrylonitrile amount of not more than 25 mass%, intermediate-nitrile NBR having the bound acrylonitrile amount of 25 mass% to 31 mass%, moderate high-nitrile NBR having the bound acrylonitrile amount of 31 mass% to 36 mass%, and high-nitrile NBR having the bound acrylonitrile amount of not less than 36 mass%. It is favorable that the bound acrylonitrile amount is in the range of 21 mass% to 46 mass% and more favorable that the bound acrylonitrile amount is in the range of 31 mass% to 36 mass%.

The HNBR is obtained by chemically hydrogenating the double bonds contained in butadiene present in the polymer main chain of the NBR. The HNBR used in the present invention has the residual double bonds not more than 10% after the double bonds are hydrogenated. The bound acrylonitrile amount of the HNBR is favorably in the range of 21 mass% to 46 mass% and more favorably in the range of 21 mass% to 44 mass%. The reason the bound acrylonitrile amount of the HNBR is set to 21 mass% to 46 mass% is as follows: If the bound acrylonitrile amount of the HNBR is less than 21 mass%, the resulting thermosetting elastomer composition has an inferior mechanical property. On the other hand, if the bound acrylonitrile amount of the HNBR is more than 46 mass%, the resulting thermosetting elastomer composition has a high glass transition temperature Tg and a low toner-removing performance at a low temperature and humidity.

The Mooney viscosity ML1+4 (100°C) of the HNBR is favorably in the range of 20 to 160

The XNBR and the HXNBR are obtained by terpolymerizing acrylic acid or methacrylic acid to introduce a carboxyl group into the side chain or the terminal of the NBR and the HNBR respectively as the third component thereof. It is favorable that the content ratio of the carboxyl group is set to 0.5 to 30 mass%. It is possible to use the commercially available XNBR and the HXNBR formed by the terpolymerization. For example, it is possible to use Krynac series and Therban series produced by Bayer Ltd.

After the NBR, the HNBR, the XNBR or the HXNBR is roughly kneaded by using the rubber-kneading apparatus, as described above, the filler (2) and the crosslinking agent (3) are simultaneously supplied to the rubber-kneading apparatus and kneaded.

The filler (2) essentially contains the zinc oxide and the carbon black therein. In addition, stearic acid, an age resistor, and a vulcanizing accelerator are added to the rubber component.

The particle diameter of the zinc oxide is set to the range of 1 to 40 μm and favorably to the range of 5 to 40μm. In the kneading step, the zinc oxide are dispersed as fine particles in the thermosetting elastomer composition. The mixing amount of the zinc oxide is set to 1 to 15 parts by mass and favorably 1 to 10 parts by mass for 100 parts by mass of the rubber component (1).

The carbon black added to the rubber component (1) as the filler (2) functions as a reinforcing agent, thus contributing to the improvement of the mechanical property of the resulting thermosetting elastomer composition. It is preferable to use ISAF carbon as the carbon black. The mixing amount of the reinforcing agent is set especially favorably to 5 to 30 parts by mass and most favorably 10 to 30 parts by mass for 100 parts by mass of the rubber component (1).

The zinc oxide and the stearic acid which is added to the rubber component (1) as the filler (2) function as vulcanization-accelerating assistants. The mixing amount of the stearic acid is set favorably to 0.1 to 20 parts by mass, more favorably to 0.5 to 10 parts by mass, and most favorably to 0.5 to 5 parts by mass for 100 parts by mass of the rubber component (1).

As the filler (2), it is possible to add a co-crosslinking agent, the vulcanizing accelerator, the age resistor, a softener for rubber, and other additives to the rubber component. It is favorable to add the vulcanizing accelerator and the age resistor to the rubber component.

The step of kneading the rubber component (1), the filler (2), and the crosslinking agent (3) by simultaneously supplying the filler (2) and the crosslinking agent (3) to the roughly kneaded rubber component (1) is performed by heating them at 60 to 110°C for 0.5 to 10 minutes.

The thermosetting elastomer composition obtained through the above-described steps is filled in a die and press-vulcanized at 160 to 170°C for 20 to 40 minutes to mold the thermosetting elastomer composition into the cleaning blade 10. When the vulcanizing temperature is less than 160°C and the vulcanizing period of time is less than 20 minutes, the thermosetting elastomer composition is vulcanized insufficiently. When the vulcanizing temperature is more than 170°C and the vulcanizing period of time is more than 40 minutes, there is a fear that the rubber component (1) may be decomposed.

The thermosetting elastomer composition is molded and processed into the rectangular cleaning blade 10 having a thickness of 1 to 3mm, a width of 10 to 40mm, and a length of 200 to 500mm.

The cleaning blade 10 produced in the above-described method has the following performance:

The cleaning blade 10 had a wear indication value of not more than 40μm when the wear indication value is measured after a paper supply test was conducted by mounting the cleaning blade 10 on an image-forming apparatus. It is preferable that the lower limit of the wear indication value of the cleaning blade is as close as zero but is set to not less than 1μm.

That the sectional length of the worn surface is less than 1μm means that the thermosetting elastomer composition does not wear, which does not occur actually. Therefore the lower limit of the wear indication value of the cleaning blade is set to not less than 1μm. The upper limit of the wear indication value of the cleaning blade is set to not more than 40μm for the reason described below. If the upper limit of the wear indication value of the cleaning blade is more than 40μm, the edge thereof wears to a high extent. Thus there is a fear that toner is defectively removed.

The cleaning performance value of the cleaning blade 10 is not more than 0.5, when the cleaning performance value thereof is measured after the paper supply test for image formation is conducted by mounting the cleaning blade 10 on the image-forming apparatus.

The cleaning performance value of the cleaning blade is set to not more than 0.5 for the reason described below. If the cleaning performance value of the cleaning blade is more than 0.5, a large amount of toner remains on the surface of the photoreceptor after the cleaning blade slidingly contacts the surface thereof. In this case, there is a fear that a printed image may be adversely affected. It is preferable that the lower limit of the cleaning performance value of the cleaning blade is as close as zero, but is set to not less than 0.1. The cleaning blade whose cleaning performance value is zero means that toner is all removed and that the cleaning blade has the most favorable cleaning performance.

The wear indication value and the cleaning performance value are measured and evaluated in the following manner, after the paper supply test for image formation is conducted by mounting the cleaning blade on the image-forming apparatus.

Initially the paper supply test for image formation is conducted. More specifically, a cleaning blade is punched in a predetermined size out of a sheet, made of the thermosetting elastomer composition, which has a thickness of 2mm. After the cleaning blade is bonded to a supporting member, the cleaning blade is mounted on the image-forming apparatus with the cleaning blade in contact with a photoreceptor. The image-forming apparatus is a printer in which the photoreceptor rotates, and toner can be developed. The toner to be used is of the polymerization type and has a spherical degree of 0.90 to 0.99 and an average particle diameter of 5 to 10μm. Print is made on 150,000 sheets at 4% print concentration at a temperature of 23°C and a relative humidity of 55% by rotating the photoreceptor at a rotational speed of 200 to 500mm/second.

Observing the edge of the cleaning blade after the paper supply test for image formation finishes, the cleaning blade has a worn edge as shown in Fig. 2A which is a sectional view thereof. A crosshatched portion of Fig. 2A shows a worn portion of the cleaning blade. A worn surface forms a straight line, as shown in Fig. 2A, but may form a curved line.

A sectional length Ws (23d in Fig. 2A) of the worn surface is the length of an inclined surface of the cleaning blade formed by connecting a worn length of a surface 10a of the cleaning blade, namely, an end of a worn depth Wm (23a in Fig. 2A) which is the depth-direction worn length and a worn length on a thickness surface 10b of the cleaning blade, namely, a worn end of a worn width Wc (23b in Fig. 2A) which is the longitudinal worn length to each other. The wear indication value is measured as the horizontal distance of the sectional length Ws of the worn surface when the sectional length Ws of the worn surface inclines at 45 degrees. More specifically, after the paper supply test for image formation finishes, the cleaning blade taken out of the image-forming apparatus is inclined by 45° so that the surface 10a thereof shifts to the upper side (thickness surface 10b is disposed at the lower side) from a state in which the cleaning blade is erect as shown in Fig. 2A, namely, a state in which the thickness surface 10b thereof is horizontal to the ground. Fig. 2B is an enlarged sectional view of the distal portion of the cleaning blade when the cleaning blade is inclined by 45°. The horizontal distance (24 in Fig. 2B) of the sectional length Ws (23d in Fig. 2A) is the wear indication value.

After the paper supply test for image formation finishes, the amount of toner supplied to the photoreceptor per unit area is computed beforehand to obtain a toner amount Ta on the surface of the photoreceptor before the cleaning blade slidingly contacts the surface of the photoreceptor. The photoreceptor is rotated to remove the toner by the cleaning blade. Thereafter the amount of the toner present in a region of the surface of the photoreceptor disposed rearward from the cleaning blade is converted into an amount per unit area to obtain a toner amount Tb which remains on the surface of the photoreceptor after the cleaning blade slidingly contacts the surface thereof. In this manner, the toner amount Tb which remains on the surface of the photoreceptor after the cleaning blade slidingly contacts the surface thereof is obtained. The cleaning performance value = (toner amount Tb which remains on surface of photoreceptor after cleaning blade slidingly contacts surface thereof)/(toner amount Ta before cleaning blade slidingly contacts surface of photoreceptor).

Examples of the present invention and comparison examples are described below.

• Examples 1 through 4

After the rubber component (1) was measured in an amount shown in table 1, the rubber component (1) was supplied to the rubber-kneading apparatus and masticated for 0.5 to 6 minutes with the rubber component (1) being heated to 60°C to 110°C.

After the filler (2) and the crosslinking agent (3) were measured in an amount shown in table 1, the filler (2) and the crosslinking agent (3) were supplied to the rubber-kneading apparatus. Thereafter the filler (2), the crosslinking agent (3), and the rubber component (1) were kneaded for 0.5 to 10 minutes while they were being heated to 60°C to 110°C.

After the obtained thermosetting elastomer composition was set in a die, it was press-vulcanized at 160°C for about 30 minutes to obtain a sheet having a thickness of 2mm.

After a cleaning blade having a width of 27mm and a length of 320mm was cut out of the sheet having the thickness of 2mm, the cleaning blade was bonded to a supporting member made of chrome-free SECC with a hot-melt. Thereafter the central portion of the sheet was cut to form a cleaning member by using a cutting blade made of diamond.

• Comparison Examples 1 through 4

After the rubber component (1) was measured in an amount shown in table 1, the rubber component (1) was supplied to the rubber-kneading apparatus and masticated for 0.5 to 6 minutes with the rubber component (1) being heated to 60°C to 110°C.

After the filler (2) was measured in an amount shown in table 1, the filler (2) was supplied to the rubber-kneading apparatus to knead them for 0.5 to 10 minutes, while they were being heated to 60°C to 110°C .

After the crosslinking agent (3) measured in an amount shown in table 1 and the obtained mixture of the rubber component (1) and the filler (2) were supplied to the rubber-kneading apparatus, they were kneaded for 0.5 to 10 minutes while they were being heated to 60°C to 110°C.

A cleaning member was prepared from the obtained thermosetting elastomer composition in the same manner as that of the examples.

Table 1

| | | Example 1 Comparison example 1 | Example 2 Comparison example 2 | Example 3 Comparison example 3 | Example 4 Comparison example 4 |
|---|---|---|---|---|---|
| Rubber component (1) | NBR | 100 | | | |
| | HNBR | 100 | | | |
| | XNBR | | 100 | | |
| | HXNBR | | | | 100 |
| Filler (2) | Carbon black | 20 | 20 | 20 | 20 |
| | Stearic acid | 1 | 1 | 1 | 1 |
| | Zinc oxide | 5 | 5 | 5 | 5 |
| | Age resistor A | 1 | 1 | 1 | 1 |
| | Age resistor B | 2 | 2 | 2 | 2 |
| | Vulcanizing accelerator A | 1.5 | 1.5 | 1.5 | 1.5 |
| | Vulcanizing accelerator B | 0.5 | 0.5 | 0.5 | 0.5 |
| Crosslinking agent(3) | Sulfur | 1.5 | 1.5 | 1.5 | 1.5 |

The unit of the mixing amount of each of the rubber component (1), the filler (2), and the crosslinking agent (3) shown in table 1 is indicated by part by mass.

The following products were used for the following components of the components shown in table 1:

- NBR: "N232S (commercial name)" produced by JSR Corporation (bound acrylonitrile amount: 35 mass%)
- HNBR: "Zetpol 2010H (commercial name)" produced by Zeon Corporation (bound acrylonitrile amount: 36 mass%, Mooney viscosity: 145)
- XNBR: "Kryrac X7.50 (commercial name)" produced by Bayer Ltd.
- HXNBR: "Therban XT VPKA8889 (commercial name)" produced by Bayer Ltd.
- Carbon black: "SEAST ISAF (commercial name)" produced by Tokai Carbon Co., Ltd.
- Stearic acid: "Tsubaki (commercial name)" produced by NOF CORPORATION
- Zinc oxide: "Two kinds of zinc oxide (commercial name)" produced by Mitsui Mining and Smelting Co., Ltd.
- Age resistor A (p,p'-dicumyldiphenylamine): "NOCRAC CD" (commercial name)" produced by Ouchishinko Chemical Industrial Co., Ltd.
- Age resistor B (2-mercaptobenzimidazole): "NOCRAC MB (commercial name)" produced by Ouchishinko Chemical Industrial Co., Ltd.
- Vulcanizing accelerator A (dibenzothiazyl sulfide): "Nocceler DM (commercial name)" produced by Ouchishinko Chemical Industrial Co., Ltd.
- Vulcanizing accelerator B (tetramethylthiuram monosulfide): "Nocceler TS (commercial name)" produced by Ouchishinko Chemical Industrial Co., Ltd.
- Sulfur: powder sulfur produced by Tsurumi Chemical Industry Co., Ltd.

The following tests were conducted on the obtained cleaning blades.

• Identification of presence of zinc sulfide and zinc oxide

A thin specimen cut out of the cleaning blade in a thickness of about 50μm was measured by using a Fourier transformation infrared spectroscopic analyzer ("Spectrum TM GX" produced by Perkin Elmer Japan Co.,Ltd.) to check whether the zinc sulfide or zinc oxide was present on the specimen, based on a peak thereof. Transparent method was used as the measuring condition. The resolution and the range were set to $16cm^{-1}$ and 150 to $160cm^{-1}$ (far infrared ray region) respectively.

• Identification of presence of zinc sulfide and zinc oxide

A specimen sheet was prepared from the cleaning blade to form a slice by a microtome to produce a sectional surface thereof. The sectional surface was observed by a scan type electron microscope ESEM ("XL30 ESEM" produced by Nikon Instech Co.,Ltd.) having an energy dispersion type element analysis apparatus EDX ("6650H" produced by HORIBA, Ltd.) mounted thereon to analyze an element of a white image which looked like the zinc sulfide or the zinc oxide. When the white image was identified as the zinc sulfide or the zinc oxide, the particle diameter thereof was measured.

(3) Evaluation of wear resistance

The cleaning member of each of the examples and the comparison examples was mounted on an image-forming apparatus which was a commercially available printer in which a photoreceptor rotates and which is capable of forming an image. After print was performed on 150,000 sheets of paper by setting the rotational speed of the photoreceptor to 200mm to 500mm/second and a print concentration to 4%, the edge of each cleaning blade was observed.

As shown in Fig. 2, the sectional length Ws (23d in Fig. 2A) which is the length of the inclined surface of the cleaning blade obtained by connecting the worn end of the worn depth Wm (23a in Fig. 2A) and the worn end of the worn width Wc (23b in Fig. 2A) to each other with a straight line was measured as the horizontal distance (24 in Fig. 2B) of the sectional length Ws of the worn surface when the cleaning blade is inclined by 45 degrees. The wear resistance of each cleaning blade was evaluated based on the degree of an obtained wear indication value thereof.

The test was conducted at a normal temperature of 23°C and a relative humidity of 55%.

(4) Evaluation of cleaning performance

The cleaning member of each of the examples and the comparison examples was mounted on an image-forming apparatus (produced by the present applicant) in which a photoreceptor rotates and which is capable of developing toner. The toner used was of the polymerization type and had a spherical degree of 0.90 to 0.99 and an average volume particle diameter of 5 to 10μm.

Print was performed at 4% concentration on 150,000 sheets of paper by setting the rotational speed of the photoreceptor to 200mm to 500mm/second. Thereafter the amount of the toner (toner amount Ta present on surface of

photoreceptor before cleaning blade slidingly contacts surface of photoreceptor) supplied to the photoreceptor per unit area was computed. The photoreceptor was rotated to remove the toner by the cleaning blade. Thereafter the amount of the toner (toner amount Tb which remains on surface of photoreceptor after cleaning blade slidingly contacts surface thereof) present in a region of the surface of the photoreceptor disposed rearward from the cleaning blade was converted into an amount per unit area. In this manner, the toner amount Tb which remains on the surface of the photoreceptor after the cleaning blade slidingly contacts surface thereof was obtained. From the obtained values, the value indicating the cleaning performance was computed based on the following equation:

The cleaning performance value = (toner amount Tb which remains on surface of photoreceptor after cleaning blade slidingly contacts surface thereof)/(toner amount Ta present on surface of photoreceptor before cleaning blade slidingly contacts surface of photoreceptor).

The test was conducted at a normal temperature of 23°C and a relative humidity of 55%.

(5) Overall judgement

In the wear resistance evaluation, cleaning members having the wear indication value less than 40μm are excellent in the wear resistance thereof. In the cleaning performance evaluation, cleaning members having the cleaning performance value less than 0.5 are excellent in the cleaning performance thereof.

Taking these values in consideration, cleaning members excellent in the wear resistance and the cleaning performance thereof were marked by "◎" Cleaning members good in the wear resistance and the cleaning performance thereof were marked by "O". Cleaning members a little inferior in the wear resistance and the cleaning performance thereof were marked by "Δ". Cleaning members inferior in the wear resistance and the cleaning performance thereof were marked by "×". Cleaning members very inferior in the wear resistance and the cleaning performance thereof were marked by "X X".

Test results are shown in table 2.

Table 2

| | Example 1 | Example 2 | Example 3 | Example 4 |
|---|---|---|---|---|
| Particle diameter (μm) of zinc oxide | 38 | 33 | 21 | 18 |
| Particle diameter (μm) of zinc sulfide | 480 | 270 | 56 | 40 |
| Wear resistance (μm) | 40 | 39 | 32 | 31 |
| Cleaning performance value | 0.49 | 0.49 | 0.38 | 0.35 |
| Judgement | ○ | ○ | ◎ | ◎ |

| | Comparison Example 1 | Comparison Example 2 | Comparison Example 3 | Comparison Example 4 |
|---|---|---|---|---|
| Particle diameter (μm) of zinc oxide | 510 | 490 | 120 | 130 |
| Particle diameter (μm) of zinc sulfide | - | - | 1040 | 780 |
| Wear resistance (μm) | 238 | 120 | 88 | 78 |
| Cleaning performance value | 1.40 | 1.23 | 1.20 | 0.92 |
| Judgement | ×× | × | × | × |

In the cleaning blades of the examples 1 through 4, the particle diameter of the zinc oxide was 18 to 38pm. Thus it was admitted that the zinc oxide was finely dispersed. Consequently vulcanization was accelerated to generate the zinc sulfide, and the zinc sulfide was finely dispersed. Thereby it could be confirmed that the cleaning blades had improved wear resistance and thus displayed excellent cleaning performance.

In the cleaning blades of the comparison examples 1 and 2, the dispersion of the zinc oxides was insufficient, and the zinc sulfide was not generated. Therefore the cleaning blades were inferior in the wear resistance and cleaning performance thereof. In the cleaning blades of the comparison examples 3 and 4, the particle diameters of the zinc oxides were comparatively small, and thus the zinc oxides has improved dispersibility. Consequently the zinc sulfide was generated. But the zinc sulfide had a low dispersibility. Thus it was confirmed that the wear resistance and cleaning performance of the cleaning blades were not sufficiently improved.

## Claims

1. A method for producing a cleaning blade, for use in an image-forming apparatus, comprising the steps of:

   roughly kneading a rubber component (1) containing rubber derived from acrylonitrile butadiene copolymer therein by supplying said rubber derived from acrylonitrile butadiene copolymer to a rubber-kneading apparatus;
   kneading said rubber component (1), a filler (2) essentially containing carbon black and zinc oxide therein, and a crosslinking agent (3) containing sulfur therein by simultaneously supplying said filler (2) and said crosslinking agent (3) to said rubber-kneading apparatus; and
   press-vulcanizing a mixture consisting of a thermosetting elastomer composition obtained at said kneading step to generate zinc sulfide and mold said thermosetting elastomer composition.

2. The method according to claim 1, wherein said rubber component (1) consists of acrylonitrile butadiene rubber (NBR); hydrogenated acrylonitrile butadiene rubber (HNBR) having residual double bonds not more than 10%; carboxyl group-introduced acrylonitrile butadiene rubber (XNBR); or carboxyl group-introduced and hydrogenated acrylonitrile butadiene rubber (HXNBR).

3. The method according to claim 1 or 2, wherein a particle diameter of said zinc oxide supplied to said rubber-kneading apparatus at said kneading step is set to not less than 0.1 μm nor more than 50 μm; and a particle diameter of said zinc sulfide generated at said press-vulcanizing step is set to not less than 1 nm nor more than 500 nm.

4. The method according to any one of claims 1 through 3, wherein said roughly kneading step is performed at a temperature of 60 to 110°C for 0.5 to 6 minutes; said kneading step is performed at a temperature of 60 to 110°C for 0.5 to 10 minutes; and said press-vulcanizing step is performed at a temperature of 160 to 170°C for 20 to 40 minutes.

5. A cleaning blade, for use in an image-forming apparatus, which is produced by a method according to any one of claims 1 through 4, comprising a thermosetting elastomer composition containing:

   a rubber component (1) containing rubber derived from acrylonitrile butadiene copolymer therein;
   a filler (2) containing zinc oxide and carbon black therein; and
   a crosslinking agent (3) containing sulfur and zinc sulfide therein,
   **characterised in that** said zinc oxide of said filler (2) is dispersed as fine particles having diameters not less than 0.1 μm nor more than 50 μm; and said zinc sulfide is dispersed as fine particles having diameters not less than 1 nm nor more than 500 nm, and
   wherein 0.1 to 30 parts by mass of said zinc oxide of said filler (2), 0.1 to 100 parts by mass of said carbon black of said filler (2), and 0.1 to 30 parts by mass of said crosslinking agent (3) are added to 100 parts by mass of said rubber component (1).

## Patentansprüche

1. Verfahren zum Herstellen einer Reinigungsklinge zur Verwendung in einem Bild bildenden Gerät, welches die nachfolgenden Schritte umfasst:

   grobes Kneten einer Kautschukkomponente (1), welche darin einen von Acrylnitrilbutadiencopolymer abgeleiteten Kautschuk enthält, durch Zuführen von von Acrylnitrilbutadiencopolymer abgeleitetem Kautschuk in ein Kautschuk-Knetgerät,
Kneten der Kautschukkomponente (1), eines Füllstoffs (2), welcher darin im Wesentlichen Ruß und Zinkoxid enthält, und eines Vernetzungsmittels (3), welches darin Schwefel enthält, durch gleichzeitiges Zuführen des Füllstoffs (2) und des Vernetzungsmittels (3) in das Kautschuk-Knetgerät und
Pressvulkanisieren einer Mischung, welche aus einer Duroplastelastomerzusammensetzung, welche in dem Knetschritt erhalten wird, besteht, um Zinksulfid zu erzeugen, sowie Formen der Duroplastelastomerzusammensetzung.

2. Verfahren nach Anspruch 1, wobei die Kautschukkomponente (1) aus Acrylnitrilbutadienkautschuk (NBR), hydriertem Acrylnitrilbutadienkautschuk (HNBR) mit nicht mehr als 10 % verbleibenden Doppelbindungen, Acrylnitrilbutadienkautschuk mit eingeführten Carboxylgruppen (XNBR) oder hydriertem Acrylnitrilbutadienkautschuk mit eingeführten Carboxylgruppen (HXNBR) besteht.

3. Verfahren nach Anspruch 1 oder 2, wobei der Partikeldurchmesser des Zinkoxids, welches bei dem Knetschritt in das Kautschuk-Knetgerät eingeführt wird, auf nicht weniger als 0,1 μm und nicht mehr als 50 μm eingestellt wird und der Partikeldurchmesser des Zinksulfids, welches bei dem Pressvulkanisierschritt erzeugt wird, auf nicht weniger als 1 nm und nicht mehr als 500 nm eingestellt wird.

4. Verfahren nach einem der Ansprüche 1 bis 3, wobei der grobe Knetschritt bei einer Temperatur zwischen 60 und 110°C für 0,5 bis 6 Minuten durchgeführt wird, der Knetschritt bei einer Temperatur von 60 bis 110°C für 0,5 bis 10 Minuten durchgeführt wird und der Pressvulkanisationsschritt bei einer Temperatur von 160 bis 170°C für 20 bis 40 Minuten durchgeführt wird.

5. Reinigungsklinge zur Verwendung in einem Bild bildenden Gerät, welche durch ein Verfahren nach einem der Ansprüche 1 bis 4 hergestellt worden ist, enthaltend eine Duroplastelastomerzusammensetzung, welche enthält,
eine Kautschukkomponente (1), welche darin einen von Acrylnitrilbutadiencopolymer abgeleiteten Kautschuk enthält,
einen Füllstoff (2), welcher darin Zinkoxid und Ruß enthält, und ein Vernetzungsmittel (3), welches darin Schwefel und Zinksulfid enthält,
**dadurch gekennzeichnet, dass** das Zinkoxid des Füllstoffs (2) als feine Partikel mit einem Durchmesser von nicht weniger als 0,1 μm und nicht mehr als 50 μm verteilt wird und das Zinksulfid als feine Partikel mit Durchmessern von nicht weniger als 1 nm und nicht mehr als 500 nm verteilt wird und,
wobei zu 100 Massenteilen der Kautschukkomponente (1) 0,1 bis 30 Massenteile des Zinkoxids des Füllstoffs (2), 0,1 bis 100 Massenteile des Ruß des Füllstoffs (2) sowie 0,1 bis 30 Massenteile des Vernetzungsmittels (3) zugegeben werden.

## Revendications

1. Procédé pour produire une lame de nettoyage destinée à être utilisée dans un appareil de formation d'images, comprenant les étapes de :

malaxage grossier d'un composant caoutchouc (1) contenant un caoutchouc dérivé d'un copolymère acrylonitrile-butadiène par apport dudit caoutchouc dérivé d'un copolymère acrylonitrile-butadiène à un appareil de malaxage de caoutchouc ;
malaxage dudit composant caoutchouc (1), d'une charge (2) contenant essentiellement du noir de carbone et de l'oxyde de zinc, et d'un agent réticulant (3) contenant du soufre par apport simultané de ladite charge (2) et dudit agent réticulant (3) audit appareil de malaxage de caoutchouc ; et
vulcaniser sous pression un mélange consistant en une composition d'élastomère thermodurcissable obtenue dans ladite étape de malaxage pour produire du sulfure de zinc et mouler ladite composition d'élastomère thermodurcissable.

2. Procédé selon la revendication 1 où ledit composant caoutchouc (1) consiste en caoutchouc acrylonitrile-butadiène (NBR) ; caoutchouc acrylonitrile-butadiène hydrogéné (HNBR) ayant des doubles liaisons résiduelles à raison de pas plus de 10 % ; caoutchouc acrylonitrile-butadiène à groupes carboxyle introduits (XNBR) ; ou caoutchouc acrylonitrile-butadiène à groupes carboxyle introduits et hydrogéné (HXNBR).

**3.** Procédé selon la revendication 1 ou 2 où un diamètre de particule dudit oxyde de zinc fourni audit appareil de malaxage de caoutchouc dans ladite étape de malaxage est fixé à pas moins de 0,1 μm et pas plus de 50 μm ; et un diamètre de particule dudit sulfure de zinc produit dans ladite étape de vulcanisation sous pression est fixé à pas moins de 1 nm et pas plus de 500 nm.

**4.** Procédé selon l'une quelconque des revendications 1 à 3 où ladite étape de malaxage grossier est réalisée à une température de 60 à 110°C pendant 0,5 à 6 minutes ; ladite étape de malaxage est réalisée à une température de 60 à 110°C pendant 0,5 à 10 min ; et ladite étape de vulcanisation sous pression est réalisée à une température de 160 à 170°C pendant 20 à 40 minutes.

**5.** Lame de nettoyage destinée à être utilisée dans un appareil de formation d'images qui est produite par un procédé selon l'une quelconque des revendications 1 à 4, comprenant une composition d'élastomère thermodurcissable contenant :

un composant caoutchouc (1) contenant un caoutchouc dérivé d'un copolymère acrylonitrile-butadiène ;
une charge (2) contenant de l'oxyde de zinc et du noir de carbone ; et
un agent réticulant (3) contenant du soufre et du sulfure de zinc,
**caractérisée en ce que** ledit oxyde de zinc de ladite charge (2) est dispersé sous forme de fines particules ayant des diamètres non inférieurs à 0,1 μm et non supérieurs à 50 μm ; et ledit sulfure de zinc est dispersé sous forme de fines particules ayant des diamètres non inférieurs à 1 nm et non supérieurs à 500 nm, et
où 0,1 à 30 parties en masse dudit oxyde de zinc de ladite charge (2), 0,1 à 100 parties en masse dudit noir de carbone de ladite charge (2) et 0,1 à 30 parties en masse dudit agent réticulant (3) sont ajoutées à 100 parties en masse dudit composant caoutchouc (1).

Fig. 1

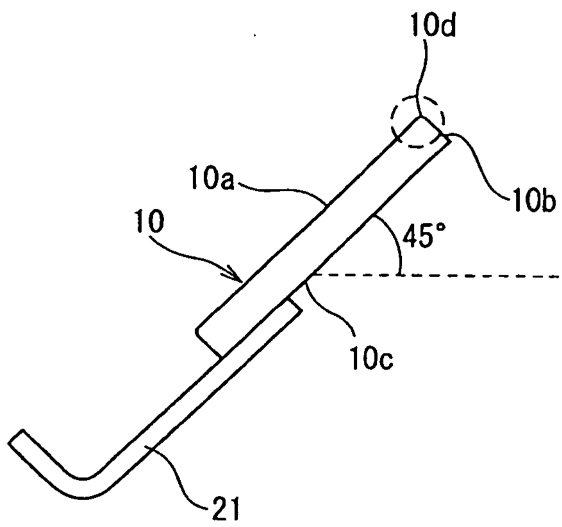

Fig. 2A

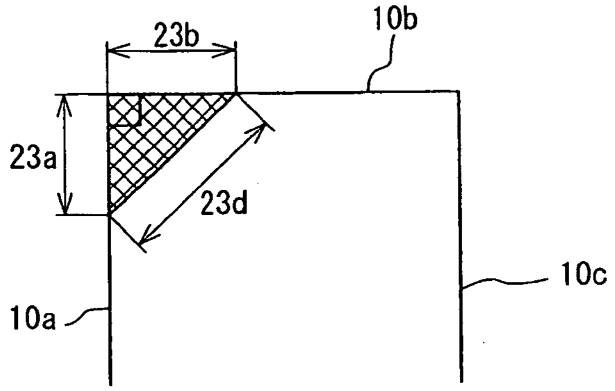


Fig. 2B

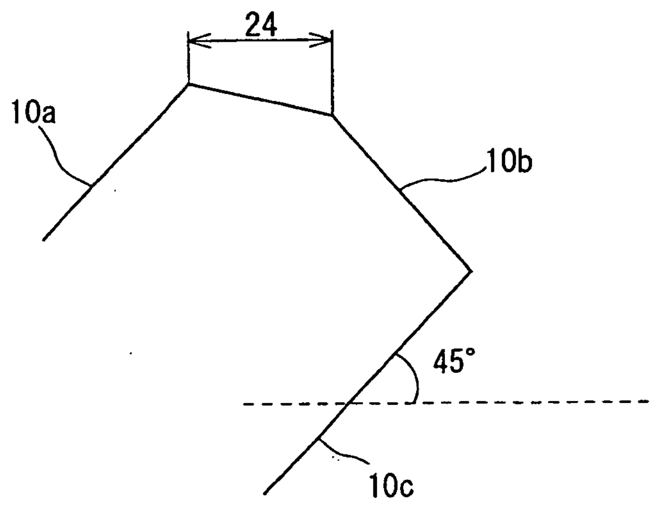

Fig. 3

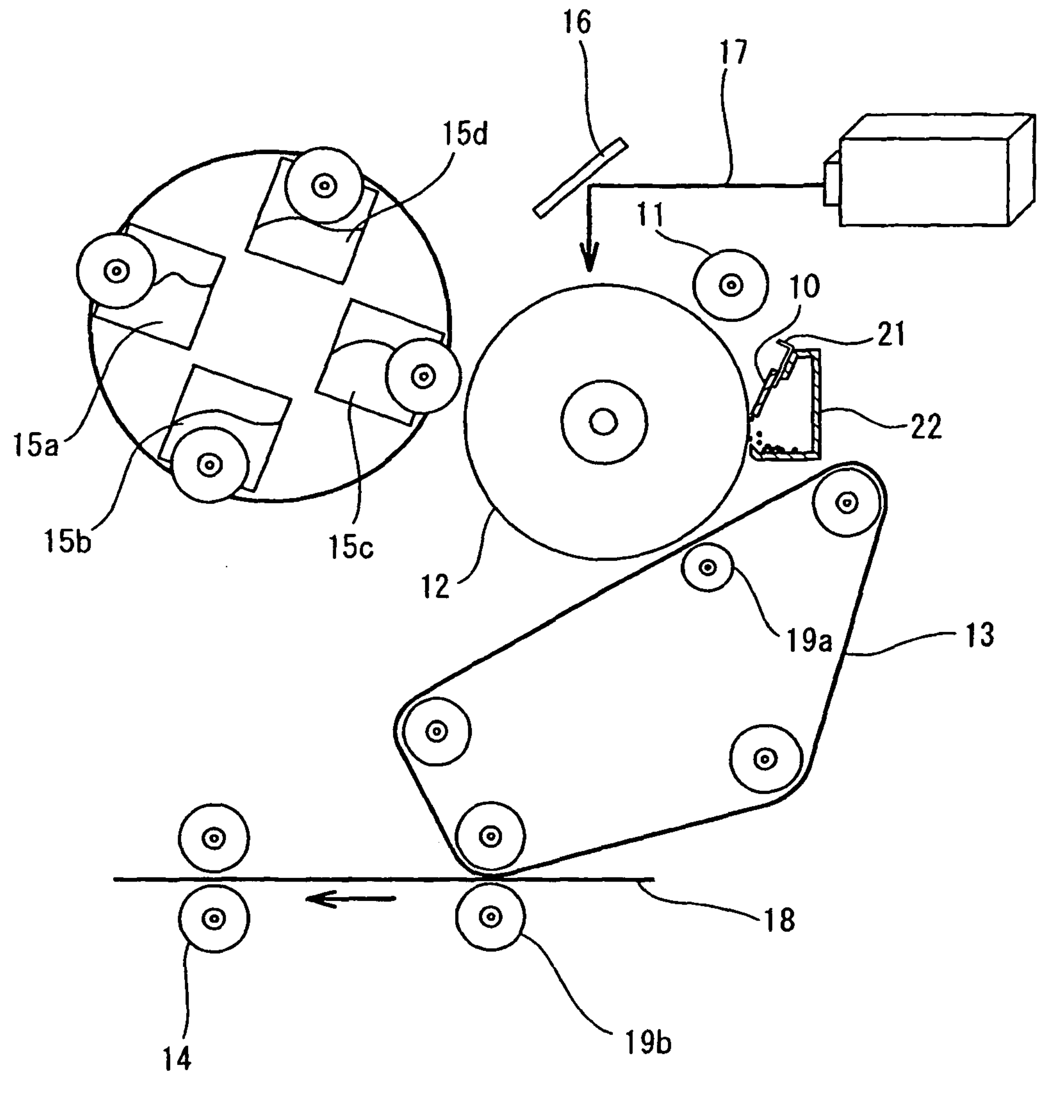

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003248404 A
- US 20070078218 A1
- WO 9749763 A1

### Non-patent literature cited in the description

- Kautschuktechnologie, Werkstoffe-Verarbeitung-Produkte. Carl Hanser Verlag, 2001, 310-311